# EUROPÄISCHE PATENTSCHRIFT

(11) **EP 1 514 781 B1**
(45) Veröffentlichungstag und Bekanntmachung des Hinweises auf die Patenterteilung: **17.10.2007**
(21) Anmeldenummer: 04019975.4
(22) Anmeldetag: 23.08.2004
(51) Int. Cl.: B62J 11/00, B62H 5/00

(54) **Halterung zur Befestigung eines Zubehörteils an einem Zweirad**
Support for fixing accessories on two-wheelers
Support pour fixer des accesoires sur des deux-roues

(30) Priorität: 10.09.2003 DE 10341783
(43) Veröffentlichungstag der Anmeldung: 16.03.2005
(73) Patentinhaber: ABUS August Bremicker Söhne KG, 58300 Wetter-Volmarstein (DE)
(72) Erfinder:
(74) Vertreter: Manitz, Finsterwald & Partner GbR

(56) Entgegenhaltungen:
- EP-A- 0 760 333
- DE-A1- 4 312 032
- DE-A1- 19 627 624

## Beschreibung

Die Erfindung betrifft eine Halterung zur Befestigung eines Zubehörteils, insbesondere eines Schlosses, an einem Zweirad. Die Halterung besitzt einen Kloben und eine Klobenaufnahme, die sich jeweils entlang einer Längsachse erstrecken.

Um den Kloben in der Klobenaufnahme zu sichern, sind verschiedene Verriegelungsmechanismen bekannt, wobei oftmals ein Einrasten des Klobens in der Klobenaufnahme vorgesehen ist. Um den Kloben für eine Entnahme aus der Klobenaufnahme wieder frei zu geben, ist üblicherweise ein zusätzlicher Auslösemechanismus vorgesehen, der beispielsweise durch Drücken einer Auslösetaste betätigt wird. Ein derartiger Auslösemechanismus erfordert jedoch einen erheblichen zusätzlichen baulichen Aufwand, und die Betätigung ist für den Benutzer umständlich, da zusätzlich zu dem Halten und Handhaben des Zubehörteils beispielsweise die erläuterte Auslösetaste gedrückt werden muss.

Dokument DE 196 27 624 A1 offenbart eine Halterung zur Befestigung eines Zubehörteils gemäß dem Oberbegriff von Anspruch 1.

Es ist daher eine Aufgabe der Erfindung, eine Halterung für Zweiradzubehör zu schaffen, die bei geringem Herstellungsaufwand eine einfache Betätigung gestattet.

Diese Aufgabe wird durch eine Halterung mit den Merkmalen des Anspruchs 1 gelöst.

Diese Halterung zeichnet sich somit durch einen Kloben aus, der an einem Kopf abschnittsweise radial verbreitert ist, um an einer oder mehreren Haltefedern innerhalb eines Aufnahmeraums der Klobenaufnahme verrasten zu können. Der Kloben kann also mit dem Kopf voraus in axialer Richtung, d.h. entlang seiner Längsachse, in die Klobenaufnahme eingeführt werden, wobei die wenigstens eine Haltefeder kurzzeitig radial nach außen zurückgedrängt wird und nach Passieren des Klobenkopfs radial nach innen zurückschnappt. Die Haltefeder befindet sich nun auf axialer Höhe des Klobenschafts, und sie wird von einem Hintergreifungsabschnitt des Klobenkopfs beispielsweise nach der Art einer Blockiernase hintergriffen. Hierdurch ist der Kloben gegen eine axiale Entnahme aus der Klobenaufnahme blockiert. Somit kann beispielsweise ein Fahrradschloss, das mit dem Kloben verbunden ist, auf einfache Weise an einem Fahrradrahmen befestigt werden, indem der Kloben axial in die an dem Fahrradrahmen montierte Klobenaufnahme eingeführt und dort verrastet wird.

Eine Besonderheit dieser Halterung besteht in der Art und Weise, wie der Kloben aus diesem Rastschluss mit der Klobenaufnahme wieder gelöst werden kann. Hierfür ist nämlich prinzipiell lediglich eine Drehung des Zubehörteils bzw. des hiermit verbundenen Klobens um dessen Längsachse erforderlich. Der Klobenschaft ist nämlich nicht kreisrund, sondern besitzt Auslösevorsprünge, an denen der Klobenschaft einen größeren Radius aufweist als an hierzu jeweils benachbarten Eingriffsabschnitten, an welchen die wenigstens eine Haltefeder nach dem Verrasten des Klobens in der Klobenaufnahme angreift.

Durch Drehen des Klobens aus einer ersten Winkelstellung in eine zweite Winkelstellung wird anstelle eines zurückversetzten Eingriffsabschnitts ein Auslösevorsprung des Klobenschafts an die Haltefeder herangeführt, so dass die Haltefeder radial nach außen zurückgedrängt wird. Gleichzeitig wird durch diese Drehung der betreffende Hintergreifungsabschnitt des Klobenkopfs aus der axialen Projektion der Haltefeder gebracht, und stattdessen befindet sich nach der Drehung ein Freigabeabschnitt des Klobenkopfs in der axialen Projektion der Haltefeder. Der Kloben kann in dieser zweiten Winkelstellung problemlos axial aus der Klobenaufnahme entnommen werden, wobei die Haltefeder an dem betreffenden Freigabeabschnitt des Klobenkopfs entlang gleitet. Je nach dem, ob und wie die Freigabeabschnitte des Klobenkopfs angeschrägt sind, unterstützt die wenigstens eine Haltefeder die axiale Entnahmebewegung des Klobens sogar.

Das Lösen der Verrastung des Klobens in der Klobenaufnahme ist somit durch eine einfache Drehbewegung des Klobens bzw. des hiermit verbundenen Zubehörteils möglich, ohne dass eine zusätzliche Auslösetaste erforderlich ist und gedrückt werden muss. Das Lösen des Zubehörteils von dem Zweirad kann von dem Benutzer also mit einer einzigen Hand durchgeführt werden, die das Zubehörteil dreht und anschließend in axialer Richtung aus der Klobenaufnahme entnimmt.

Eine derartige Halterung kann mit geringem Aufwand gefertigt werden, da abgesehen von der erläuterten Ausgestaltung des Klobens kein besonderer Auslösemechanismus an der Klobenaufnahme ausgebildet werden muss.

Ein besonderer Vorteil dieser Halterung besteht auch darin, dass die Auslösevorsprünge und Eingriffsabschnitte des Klobenschafts sowie die Hintergreifungsabschnitte und Freigabeabschnitte des Klobenkopfs in einer regelmäßigen Teilung vorgesehen sind, d.h. der Kloben ist bezüglich eines bestimmten Teilungswinkels rotationssymmetrisch ausgebildet. Dadurch existieren mehrere frei wählbare erste Winkelstellungen, in denen der Kloben in der Klobenaufnahme mit der wenigstens einen Haltefeder verrasten kann. Der Benutzer muss also nicht darauf achten, den Kloben in einer einzigen möglichen ersten Winkelstellung in die Klobenaufnahme einzuführen.

Praktisch bewirken die rotationssymmetrische Ausgestaltung des Klobens sowie das Angreifen der wenigstens einen Haltefeder an dem Auslösevorsprung bzw. dem Eingriffsabschnitt des Klobenschafts, dass bei einem Einführen des Klobens in die Klobenaufnahme in beliebiger Winkelstellung der Kloben automatisch in die genannte erste Winkelstellung gedreht bzw. in dieser ersten Winkelstellung stabilisiert wird.

Dieses automatische Zurechtdrehen und Stabilisieren des Klobens in der ersten Winkelstellung funktioniert besonders gut, wenn die Eingriffsabschnitte und Auslösevorsprünge des Klobens in einer regelmäßigen Teilung von 90° angeordnet sind. In diesem Fall besitzt der Klobenschaft also vier rotationssymmetrisch angeordnete Eingriffsabschnitte und vier hierzu jeweils um 45° versetzt angeordnete Auslösevorsprünge. Entsprechendes gilt für die Hintergreifungsabschnitte und Freigabeabschnitte des Klobenkopfs.

Weiterhin ist es von Vorteil, wenn die Eingriffsabschnitte des Klobenschafts durch ebene Seitenflächen gebildet sind. Ein derartiger Klobenschaft kann nicht nur besonders einfach gefertigt werden, sondern die Gefahr einer Funktionsbeeinträchtigung der Halterung durch eine Verschmutzung des Klobens ist wesentlich verringert. Alternativ hierzu können die Eingriffsabschnitte des Klobenschafts jedoch auch durch konkave Wölbungen, durch Schlitze oder durch sonstige Ausnehmungen gebildet sein.

Die Auslösevorsprünge können auf einfache Weise durch Längskanten des Klobenschafts gebildet sein, insbesondere wenn der Klobenschaft einen dreieckigen, viereckigen oder mehreckigen Querschnitt besitzt.

Die Hintergreifungsabschnitte und/oder die Freigabeabschnitte des Klobenkopfs sind an ihrer Vorderseite, d.h. an der von dem Klobenschaft abgewandten Seite, vorzugsweise als Ablenkschräge ausgebildet, um bei dem Einführen des Klobens in die Klobenaufnahme die wenigstens eine Haltefeder zurückdrängen zu können. Die Vorderseite des Klobenkopfs kann sich dabei konvex gekrümmt, pyramidal oder konisch verjüngen.

Die Freigabeabschnitte des Klobenkopfs und die Auslösevorsprünge des Klobenschafts grenzen axial vorzugsweise direkt aneinander an oder gehen stetig ineinander über. Beispielsweise können die Freigabeabschnitte als Gleitflächen oder Gleitkanten ausgebildet sein, die radial genau bis an den jeweiligen Auslösevorsprung heranreichen oder die bezüglich der Auslösevorsprünge des Klobenschafts radial zurückversetzt sind, um bei dem axialen Entnehmen des Klobens aus der Klobenaufnahme ein Abgleiten der wenigstens einen Haltefeder zu ermöglichen. Es ist jedoch auch möglich, dass an dem axialen Übergang zwischen einem Auslösevorsprung des Klobenschafts und dem entsprechenden Freigabeabschnitt des Klobenkopfs eine radiale Erhebung vorgesehen ist. In diesem Fall muss also für die axiale Entnahme des Klobens aus der Klobenaufnahme selbst in der zweiten Winkelstellung des Klobens ein gewisser Rastschluss der betreffenden Haltefeder überwunden werden.

Es ist bevorzugt, wenn die Klobenaufnahme zwei Haltefedern aufweist, die einander bezüglich des Aufnahmeraums diametral gegenüberstehend angeordnet sind. In diesem Fall verrastet der Kloben in der Klobenaufnahme besonders zuverlässig, und die erläuterte Selbstjustierung des Klobens in der ersten Winkelstellung wird vorteilhaft unterstützt.

Weiterhin ist es bevorzugt, wenn die Haltefeder oder Haltefedern jeweils einen länglichen Federstreifen aufweisen, der sich in entspanntem Zustand bezüglich der Längsachse der Klobenaufnahme in tangentialer Richtung entlang des Rands des Aufnahmeraums erstreckt. Ein derartiger länglicher Federstreifen kann entlang seiner Längserstreckung an dem Hintergreifungsabschnitt des Klobenkopfs und/oder dem Eingriffsabschnitt des Klobenschafts anliegen und somit für einen besonders stabilen Sitz des Klobens in der Klobenaufnahme sorgen. Die Klobenaufnahme kann einen tangentialen Schlitz besitzen, aus dem der Federstreifen in den Aufnahmeraum hineinragt bzw. in den der Federstreifen zurückweichen kann.

Gemäß einer vorteilhaften Weiterbildung besitzt ein derartiger tangentialer Schlitz an seinen beiden Enden jeweils eine axiale Schlitzverlängerung, d.h. eine Verlängerung im Wesentlichen parallel zu der Längsachse der Klobenaufnahme. In diesem Fall wirken der Kloben und die Klobenaufnahme folgendermaßen zusammen: Wenn der Kloben in der ersten Winkelstellung in einer ersten Axiallage in die Klobenaufnahme eingeführt ist, erstreckt sich der Federstreifen zwischen den axialen Schlitzverlängerungen und ist somit von der Klobenaufnahme gegen ein radiales Zurückdrängen gesperrt. Erst wenn der Kloben - noch in der ersten Winkelstellung - axial in eine zweite Axiallage versetzt worden ist, befindet sich der Federstreifen auf Höhe des tangentialen Schlitzes der Klobenaufnahme und kann nun durch Drehen des Klobens mittels des Auslösevorsprungs des Klobenschafts radial in die Klobenaufnahme zurückgedrängt werden, um den Kloben für eine axiale Entnahme aus der Klobenaufnahme freizugeben.

Mit anderen Worten ist bei dieser Weiterbildung eine zusätzliche Sicherung des Klobens gegen eine unbeabsichtigte Entnahme aus der Klobenaufnahme vorgesehen. Der Kloben kann nämlich, solange er sich in der genannten ersten Axiallage befindet, nicht in die zweite Winkelstellung gedreht werden, da in diesem Fall eine Drehbewegung des betreffenden Auslösevorsprungs des Klobenschafts durch den Federstreifen versperrt ist und der Federstreifen wiederum gegen ein radiales Zurückdrängen blockiert ist. Erst nachdem durch eine axiale Bewegung des Klobens auch der Federstreifen axial auf Höhe des tangentialen Schlitzes versetzt worden ist, kann der Federstreifen durch das bereits erläuterte Drehen des Klobens von dem betreffenden Auslösevorsprung des Klobenschafts zurückgedrängt werden, um dadurch den Kloben freizugeben. Der Benutzer muss also den Kloben - und somit den Federstreifen - bewusst in axialer Richtung versetzen, um die Drehbewegung zum Freigeben des Klobens durchführen zu können. Eine unbeabsichtigte Drehung des Klobens wird hierdurch noch zuverlässiger verhindert.

Im Zusammenhang mit der erläuterten Weiterbildung ist es bevorzugt, wenn der Kloben axial in Richtung der ersten Axiallage vorgespannt ist. Somit muss der Kloben entgegen dieser Vorspannung in die zweite Axiallage überführt werden, um eine Drehung in die zweite Winkelstellung durchführen zu können. Dieses axiale Vorspannen kann in vorteilhafter Weise mittels der wenigstens einen Haltefeder erfolgen. Alternativ oder zusätzlich hierzu kann eine separate Feder vorgesehen sein.

Weiterhin ist es bei der erläuterten Weiterbildung bevorzugt, wenn der Kloben wenigstens einen Mitnehmerabschnitt aufweist, durch den bei einem axialen Versetzen des Klobens aus der ersten Axialstellung in die zweite Axialstellung auch der Federstreifen, wie erläutert, axial versetzt wird.

Sofern die Halterung zwei Federstreifen als jeweilige Haltefeder aufweist, ist es generell von Vorteil, wenn diese beiden Federstreifen durch ein gemeinsames, in der Klobenaufnahme gesichertes Federelement gebildet sind. Bei diesem Federelement kann es sich beispielsweise um einen U-förmigen Federbügel oder eine Federklammer aus Metall oder Kunststoff handeln. Diese Ausgestaltung verringert den Montageaufwand.

Alternativ zu dem genannten Federstreifen kann die wenigstens eine Haltefeder beispielsweise eine radial vorgespannte Kugel oder einen radial rückfedernd ausgebildeten Federring aufweisen.

Gemäß einer weiteren vorteilhaften Ausführungsform besitzt die Halterung eine Drehsicherungseinrichtung, die den Kloben gegen ein unbeabsichtigtes Verdrehen aus der ersten Winkelstellung in die zweite Winkelstellung sichert. Diese Drehsicherungseinrichtung bewirkt also - alternativ oder zusätzlich zu der erläuterten Weiterbildung der Klobenaufnahme mit axialen Schlitzverlängerungen - eine Stabilisierung des Klobens in der ersten Winkelstellung.

Zu diesem Zweck können der Kloben einerseits und die Klobenaufnahme andererseits wenigstens eine Drehsicherungsaussparung und wenigstens ein Eingriffsmittel - oder umgekehrt - aufweisen, wobei in der ersten Winkelstellung des in die Klobenaufnahme eingeführten Klobens das Eingriffsmittel rückfedernd in die Drehsicherungsaussparung eingreift. Erst ab einem vorbestimmten Drehmoment weicht das Eingriffsmittel aus der Drehsicherungsaussparung zurück und gibt den Kloben somit für eine Drehbewegung in die zweite Winkelstellung frei. Als Eingriffsmittel kann beispielsweise eine vorgespannte Kugel oder ein radial rückfedernd ausgebildeter Federring vorgesehen sein.

Die Erfindung bezieht sich auch auf die Verwendung einer Halterung der beschriebenen Art zur Befestigung eines Zubehörteils an einem Zweirad.

Weitere Ausführungsformen der Erfindung sind in den Unteransprüchen genannt. Die Erfindung wird nachfolgend beispielhaft unter Bezugnahme auf die Zeichnungen erläutert.
- Fig. 1a: zeigt eine Perspektivansicht einer ersten Ausführungsform einer Halterung zur Befestigung eines Fahrradschlosses an einem Abschnitt eines Fahrradrahmens.
- Fig. 1b und 1c: zeigen zwei unterschiedliche, teilweise aufgeschnittene Seitenansichten eines Klobens gemäß der ersten Ausführungsform.
- Fig. 1d: zeigt eine Querschnittsansicht einer Klobenaufnahme gemäß der ersten Ausführungsform.
- Fig. 1e und 1f: zeigen eine Querschnittsansicht bzw. eine Draufsicht des in die Klobenaufnahme eingeführten Klobens in einer ersten Winkelstellung.
- Fig. 1g und 1h: zeigen eine Querschnittsansicht bzw. eine Draufsicht des in die Klobenaufnahme eingeführten Klobens in einer zweiten Winkelstellung.
- Fig. 2a: zeigt eine Perspektivansicht einer zweiten Ausführungsform einer Halterung.
- Fig. 2b und 2c: zeigen zwei unterschiedliche, teilweise aufgeschnittene Seitenansichten eines Klobens gemäß der zweiten Ausführungsform.
- Fig. 2d: zeigt eine Querschnittsansicht einer Klobenaufnahme gemäß der zweiten Ausführungsform.
- Fig. 2e und 2f: zeigen eine Querschnittsansicht bzw. eine Draufsicht des in die Klobenaufnahme eingeführten Klobens in einer ersten Winkelstellung.
- Fig. 2g und 2h: zeigen eine Querschnittsansicht bzw. eine Draufsicht des in die Klobenaufnahme eingeführten Klobens in einer zweiten Winkelstellung.
- Fig. 3a: zeigt eine Perspektivansicht einer dritten Ausführungsform einer Halterung.
- Fig. 3b und 3c: zeigen zwei unterschiedliche, teilweise aufgeschnittene Seitenansichten eines Klobens gemäß der dritten Ausführungsform.
- Fig. 3d: zeigt eine Querschnittsansicht einer Klobenaufnahme gemäß der dritten Ausführungsform.
- Fig. 3e bis 3g: zeigen jeweils eine Querschnittsansicht des Klobens und der Klobenaufnahme in verschiedenen Axialstellungen und Winkelstellungen.

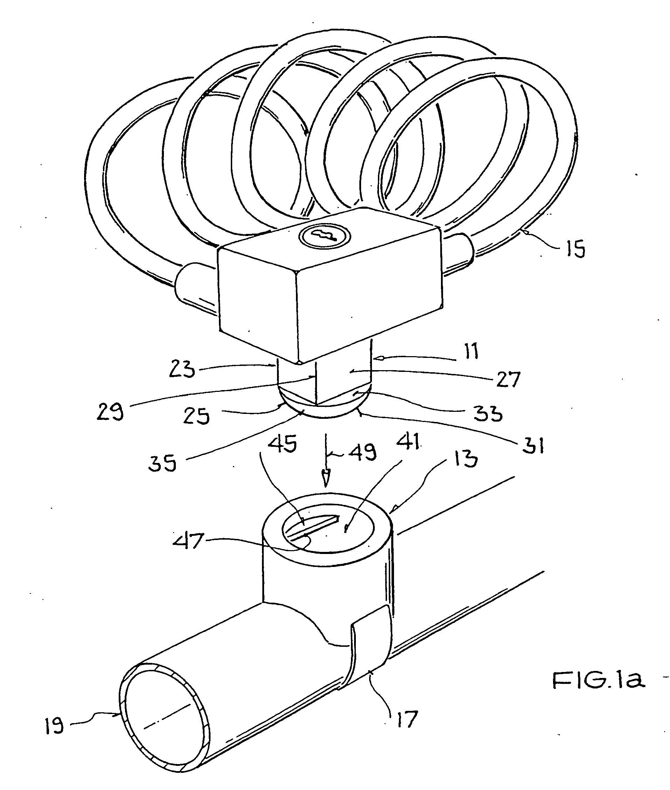

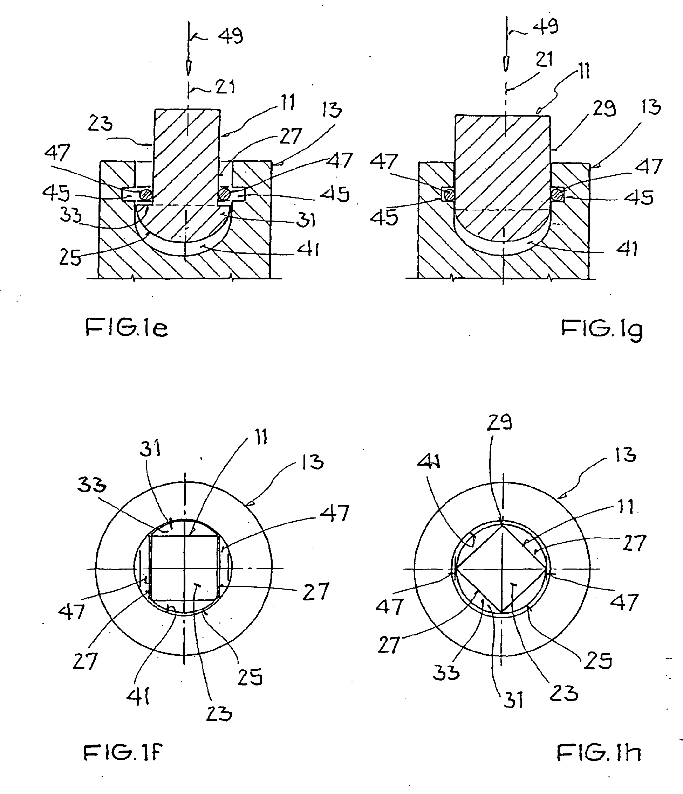

Fig. 1a zeigt einen Kloben 11 aus Metall und eine zugeordnete Klobenaufnahme 13 aus Kunststoff gemäß einer ersten Ausführungsform. Der Kloben ist mit einem Spiralkabelschloss 15 dauerhaft verbunden. Die Klobenaufnahme 13 ist mittels eines Gurtbands 17, einer Schelle oder dergleichen an einem Abschnitt 19 eines Fahrradrahmens befestigt.

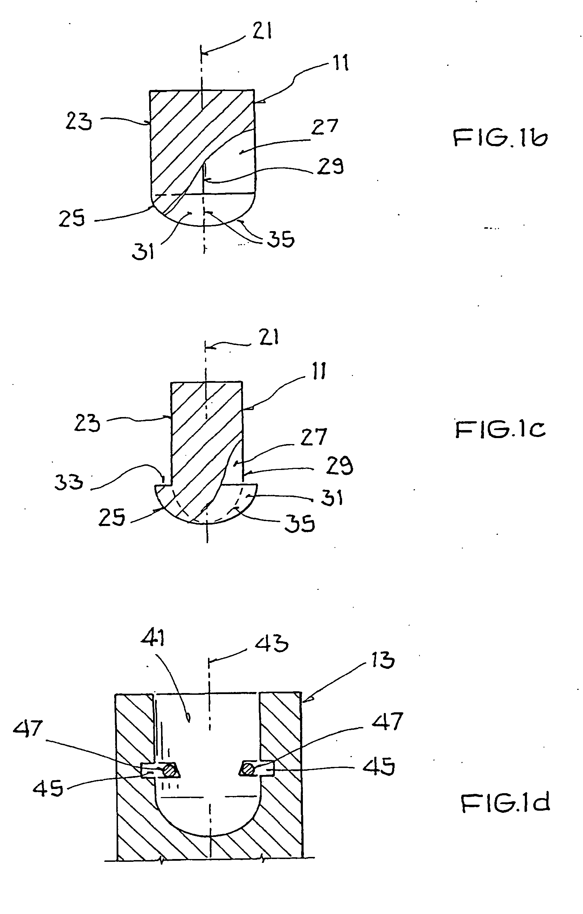

Wie insbesondere aus Fig. 1b und 1c ersichtlich ist, besitzt der Kloben 11 entlang einer Längsachse 21 einen Klobenschaft 23 und einen hieran angeformten Klobenkopf 25. Der Klobenschaft 23 besitzt in einer regelmäßigen Teilung von 90° vier Eingriffsabschnitte 27 in Form von ebenen Seitenflächen. Der Klobenschaft 23 ist somit als ein Vierkant mit quadratischem Querschnitt ausgebildet. Die Längskanten des Klobenschafts bilden jeweils einen Auslösevorsprung 29.

Die dem Klobenschaft 23 zugewandte Rückseite des Klobenkopfs 25 besitzt die Form einer ebenen Kreisfläche, deren Durchmesser genau der Diagonalen des quadratischen Querschnitts des Klobenschafts 23 entspricht. Der Klobenkopf 25 lässt sich somit in vier kugelsegmentförmige, als Blockiernasen ausgebildete Hintergreifungsabschnitte 31 unterteilen. Die Rückseite jedes Hintergreifungsabschnitts 31 grenzt an eine Seitenfläche bzw. einen Eingriffsabschnitt 27 des Klobenschafts 23 an und steht als eine Anschlagfläche 33 über diesen Eingriffsabschnitt 27 über. Die (gedachte) Trennlinie zwischen diesen vier Hintergreifungsabschnitten 31 verläuft an der Vorderseite des Klobenkopfs 25 somit von dem Ende der betreffenden Längskante 29 des Klobenschafts 23 bis zu dem Mittelpunkt des Klobenkopfs 25 an dessen Vorderseite. Diese Trennlinie bildet einen Freigabeabschnitt 35 des Klobenkopfs 25, wie nachfolgend noch erläutert wird.

Wichtig ist, dass die Hintergreifungsabschnitte 31 des Klobenkopfs 25 mit den rückseitigen Anschlagflächen 33 in axialer Verlängerung jeweils einer Seitenfläche bzw. eines Eingriffsabschnitts 27 des Klobenschafts angeordnet sind. Bei der gezeigten Ausführungsform gehen die Längskanten bzw. Auslösevorsprünge 29 des Klobenschafts 23 unmittelbar in die Vorderseite des Klobenkopfs 25 bzw. die erwähnten Freigabeabschnitte 35 des Klobenkopfs 25 über, d.h. im Bereich der Längskanten 29 des Klobenschafts 23 ragt der Klobenkopf 25 nicht radial über den Klobenschaft 23 hinaus.

Wie insbesondere aus Fig. 1d ersichtlich ist, besitzt die Klobenaufnahme 13 im Wesentlichen die Form eines an einer Stirnseite geöffneten Hohlzylinders. Die Klobenaufnahme 13 umgibt somit einen Aufnahmeraum 41 zum Aufnehmen des Klobens 11.

An der Innenwand der Klobenaufnahme 13 erstrecken sich bezüglich einer Längsachse 43 der Klobenaufnahme 13 jeweils in tangentialer Richtung zwei Aufnahmeschlitze 45. Die beiden Aufnahmeschlitze 45 stehen einander diametral gegenüber. Aus jedem Aufnahmeschlitz 45 ragt eine Haltefeder in Form eines Federstreifens 47 heraus. Die Federstreifen 47 sind bezüglich der zentralen Längsachse 43 radial nach innen vorgespannt und verlaufen parallel zueinander. Die beiden Federstreifen 47 sind beispielsweise durch Drahtabschnitte gebildet.

Der Kloben 11 und die Klobenaufnahme 13 bilden eine Halterung, die ein Befestigen des Schlosses 15 an dem Fahrradrahmenabschnitt 19 ermöglicht und vom Benutzer sehr einfach zu bedienen ist. Das Sichern des Schlosses 15 an dem Fahrradrahmenabschnitt 19 und das nachfolgende Freigeben funktionieren wie folgt:

Um den Kloben 11 in der Klobenaufnahme 13 zu sichern, wird der Kloben 11 axial entlang einer Einführrichtung 49 in die Klobenaufnahme 13 eingeführt. Falls dabei bereits die Seitenflächen bzw. Eingriffsabschnitte 27 des Klobenschafts 23 näherungsweise parallel zu der Ausrichtung der beiden Federstreifen 47 ausgerichtet sind - wie dies in Fig. 1a gezeigt ist -, so drängt der vorderseitig konvex gewölbte Klobenkopf 25 die beiden Federstreifen 47 zunächst kurzzeitig radial nach außen in die Aufnahmeschlitze 45 zurück. Nachdem der Klobenkopf 25 über die Federstreifen 47 hinaus in die Klobenaufnahme 13 eingeführt worden ist, schnappen die vorgespannten Federstreifen 47 zurück und legen sich an die Seitenflächen bzw. Eingriffsabschnitte 27 des Klobenschafts 23 an.

Fig. 1e und 1f zeigen den somit erreichten Zustand. Die betreffenden Seitenflächen bzw. Eingriffsabschnitte 27 des Klobenschafts 23 sind nun vollständig parallel zu den zurückgeschnappten Federstreifen 47 ausgerichtet. Der Klobenkopf 25 ist nun an den Federstreifen 47 verrastet. Die Federstreifen 47 blockieren den Klobenkopf 25 an den Anschlagflächen 33 gegen eine Entnahme aus der Klobenaufnahme 13. Der Kloben 11 nimmt nun eine erste Winkelstellung relativ zu der Klobenaufnahme 13 ein.

Falls der Kloben 11 beim Einführen in die Klobenaufnahme 13 vom Benutzer nicht bewusst derart ausgerichtet wird, dass die Seitenflächen bzw. Eingriffsabschnitte 27 des Klobenschafts 23 von vornherein näherungsweise parallel zu der Erstreckungsrichtung der Federstreifen 47 verlaufen, so bewirkt der Klobenkopf 25 selbstverständlich dennoch das erläuterte Zurückdrängen der Federstreifen 47. Nachdem der Klobenkopf 25 die Federstreifen 47 in axialer Richtung passiert hat, greifen die Federstreifen 47 an dem Klobenschaft 23 an, und zwar an den Längskanten bzw. Auslösevorsprüngen 29. Falls der Kloben 11 bezüglich der in Fig. 1e und 1f gezeigten ersten Winkelstellung nicht genau um 45° verdreht ist, bewirken die von den Federstreifen 47 ausgeübten Druckkräfte ein Drehmoment auf den in der Klobenaufnahme 13 drehbar gelagerten Kloben 11. Der Kloben 11 wird auf diese Weise von den Federstreifen 47 automatisch in die genannte erste Winkelstellung gedreht, so dass er nun innerhalb der Klobenaufnahme 13 verrastet ist, wie in Fig. 1e und 1f gezeigt.

In dem seltenen Fall, dass der Benutzer den Kloben 11 zufällig genau um 45° bezüglich der ersten Winkelstellung versetzt in die Klobenaufnahme 13 einführt, merkt der Benutzer, dass noch kein Rastschluss zwischen dem Kloben 11 und der Klobenaufnahme 13 hergestellt ist. Er wird deshalb intuitiv lockere Axial- und Drehbewegungen an dem Kloben 11 bzw. dem hiermit verbundenen Schloss 15 durchführen. Die hierdurch verursachte geringfügige Änderung der Winkelstellung des Klobens 11 genügt in der Praxis bereits, um die erläuterte Selbstjustierung der Winkelstellung mittels der Federstreifen 47 auszulösen.

Um den derartig verrasteten Kloben 11 wieder aus der Klobenaufnahme 13 freizugeben, wird wie folgt verfahren:

Ausgehend von der in Fig. 1e und 1f gezeigten ersten Winkelstellung übt der Benutzer - indirekt über das Schloss 15 - ein Drehmoment auf den Kloben 11 aus, um diesen in eine zweite Winkelstellung zu bringen, die bezüglich der ersten Winkelstellung um 45° versetzt ist. Sobald diese zweite Winkelstellung erreicht ist, sind die beiden Federstreifen 47 mittels der betreffenden Längskanten bzw. Auslösevorsprünge 29 des Klobenschafts 23 vollständig radial nach außen zurückgedrängt.

Fig: 1g und 1h zeigen den somit erreichten Zustand. Der Kloben 11 kann nun problemlos entgegen der Einführrichtung 49 aus der Klobenaufnahme 13 entnommen werden, da bei einer derartigen Axialbewegung des Klobens 11 die vorgespannten Federstreifen 47 entlang des verbleibenden Teils der jeweiligen Längskante bzw. des jeweiligen Auslösevorsprungs 29 des Klobenschafts 23 entlang gleiten und von dort aus entlang des sich hieran anschließenden, zunehmend radial zurückversetzten Freigabeabschnitts 35 des Klobenkopfs 25 entlang gleiten.

In der Praxis führt die radiale Vorspannung der Federstreifen 47 einerseits und die gewölbte oder gekrümmte Ausgestaltung des Klobenkopfs 25 andererseits dazu, dass die Federstreifen 47 die axiale Entnahmebewegung des Klobens 11 sogar noch unterstützen.

Die in Fig. 1a bis 1h gezeigte Halterung hat somit den Vorteil einer besonders einfachen Handhabung durch den Benutzer. Der mit dem Schloss 15 verbundene Kloben 11 wird einfach axial in die Klobenaufnahme 13 eingesetzt, um dort automatisch zu verrasten. Um das Schloss 15 wieder von der Klobenaufnahme 13 lösen zu können, muss der Benutzer lediglich eine Drehung des Klobens 11 durchführen, wobei mit Erreichen der erforderlichen zweiten Winkelstellung der Kloben 11 für eine axiale Entnahme freigegeben ist und die Federstreifen 47 die axiale Entnahmebewegung sogar noch unterstützen.

Die erläuterte einfache und dennoch zuverlässige Handhabung der Halterung kann mit geringem Herstellungsaufwand verwirklicht werden, da kein zusätzlicher Auslösemechanismus erforderlich ist.

Zu der Ausführungsform gemäß Fig. 1a bis 1h ist noch anzumerken, dass die Längskanten bzw. Auslösevorsprünge 29 des Klobenschafts 23 nicht unbedingt parallel zu der Längsachse 21 des Klobens 11 verlaufen müssen, sondern in Richtung des Klobenkopfs 25 verjüngt ausgebildet sein können. Hierdurch erfolgt die erläuterte Unterstützung der axialen Entnahmebewegung mittels der an den Auslösevorsprüngen 29 angreifenden Federstreifen 47 sogar noch wirkungsvoller. Alternativ hierzu kann vorgesehen sein, dass der Klobenkopf 25 an den Freigabeabschnitten 35 radial geringfügig über den jeweiligen Auslösevorsprung 29 übersteht, so dass der Kloben 11 auch in der zweiten Winkelstellung noch einen gewissen Rastschluss mit den Federstreifen 47 eingeht. Dieser Rastschluss muss also zusätzlich überwunden werden, um den Kloben 11 axial aus der Klobenaufnahme 13 entnehmen zu können.

Alternativ zu der Ausgestaltung aus Metall kann der Kloben 11 zumindest teilweise aus Kunststoff gefertigt sein. Die Klobenaufnahme 13 kann alternativ zumindest teilweise aus Metall gefertigt sein.

Die Klobenaufnahme 13 kann anstelle der beschriebenen Hohlzylinderform auch eine andere Hohl- oder Käfigform besitzen, insbesondere die Form einer einseitig geöffneten Hohlkugel.

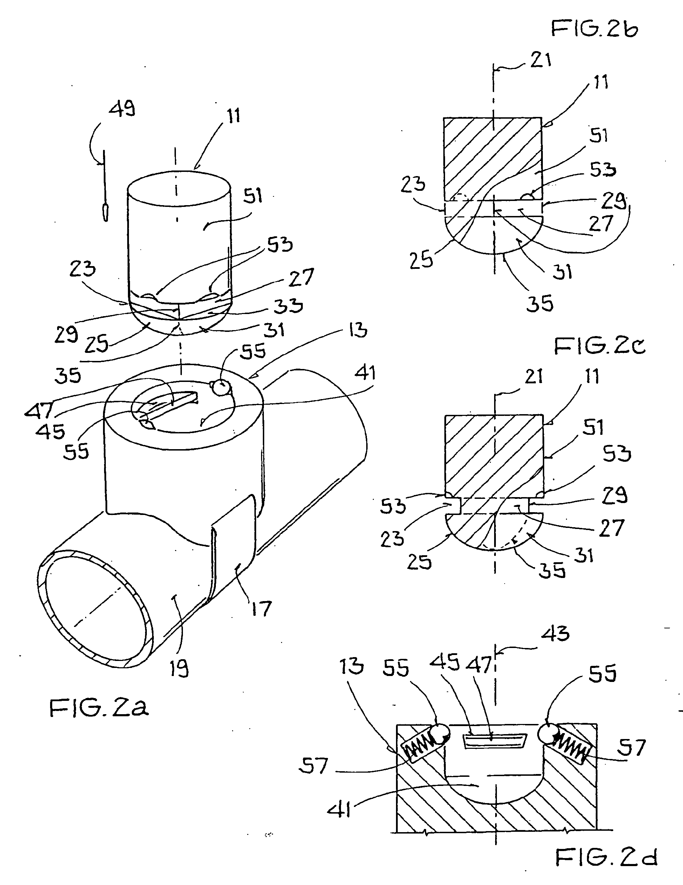

Fig. 2a bis 2h zeigen eine zweite Ausführungsform einer Halterung, die eine Weiterbildung der Ausführungsform gemäß Fig. 1a bis 1h ist. Gleichartige Teile wie bei der ersten Ausführungsform sind mit denselben Bezugszeichen gekennzeichnet. Im Einzelnen bestehen folgende Unterschiede zu der ersten Ausführungsform:

Wie insbesondere aus Fig. 2a bis 2c ersichtlich ist, besitzt der Kloben 11 an der dem Klobenkopf 25 abgewandten Rückseite einen angeformten Zylinderansatz 51. Der Zylinderansatz 51 besitzt denselben Durchmesser wie der Klobenkopf 25, so dass der Durchmesser der Diagonalen des quadratischen Querschnitts des Klobenschafts 23 entspricht. Benachbart zu jeder der vier Seitenflächen bzw. Eingriffsabschnitte 27 des Klobenschafts 23 besitzt der Zylinderansatz 51 jeweils eine Drehsicherungsaussparung 53. Somit sind an der Vorderkante des Zylinderansatzes 51 vier Drehsicherungsaussparungen 53 in derselben regelmäßigen Teilung angeordnet wie die vier Eingriffsabschnitte 27 des Klobenschafts 23 und die vier Hintergreifungsabschnitte 31 des Klobenkopfs 25.

Wie insbesondere aus Fig. 2a und 2d ersichtlich ist, besitzt die Klobenaufnahme 13 zwei Eingriffskugeln 55, die in einem jeweiligen Kugelkanal 57 beherbergt sind. Die Kugelkanäle 57 münden an die Innenkante der offenen Stirnseite der Klobenaufnahme 13. Die beiden Eingriffskugeln 55 sind innerhalb der Kugelkanäle 57 radial nach innen und bezüglich der Längsachse 43 der Klobenaufnahme 13 in geneigter Richtung vorgespannt. Die beiden Eingriffskugeln 55 sind bezüglich der Anordnung der beiden Federstreifen 47 um 90° versetzt, und sie stehen einander diametral gegenüber.

Die beiden Eingriffskugeln 55 und jeweils zwei der vier Drehsicherungsaussparungen 53 wirken als Drehsicherungseinrichtung zusammen. Dadurch wird der in die Klobenaufnahme 13 eingeführte Kloben 11 gegen ein unbeabsichtigtes Verdrehen aus der ersten Winkelstellung in die zweite Winkelstellung gesichert.

Fig. 2e und 2f illustrieren dieses Sicherungsprinzip für die erste Winkelstellung des Klobens 11, wobei die Schnittebene gemäß Fig. 2e bezüglich der in Fig. 1e gezeigten Schnittebene um 90° gedreht ist. Sofern der Kloben 11 ordnungsgemäß in die Klobenaufnahme 13 eingesetzt ist und sich in der ersten Winkelstellung befindet, liegen die Federstreifen 47 an den Eingriffsabschnitten 27 des Klobenschafts 23 an, wie im Zusammenhang mit Fig. 1e bereits erläutert. In diesem Zustand greifen die beiden Eingriffskugeln 55 jeweils in eine zugeordnete Drehsicherungsaussparung 53 des Zylinderansatzes 51 ein. Der Kloben 11 ist hierdurch zusätzlich gegen eine unbeabsichtigte Drehung gesichert, die den Kloben 11 in unerwünschter Weise in die zweite Winkelstellung bringen könnte.

Falls der Benutzer den Kloben 11 bewusst in die zweite Winkelstellung drehen will, um den Kloben 11 für eine Entnahme aus der Klobenaufnahme 13 freizugeben, so müssen zusätzlich zu dem Zurückdrängen der Federstreifen 47 - wie im Zusammenhang mit dem ersten Ausführungsbeispiel erläutert - die beiden Eingriffkugeln 55 aus der jeweiligen Drehsicherungsaussparung 53 in den betreffenden Kugelkanal 57 zurückgedrängt werden. Mit anderen Worten muss kurzzeitig ein erhöhtes Drehmoment aufgebracht werden, um den Kloben 11 danach mit dem normalen, geringeren Kraftaufwand in die zweite Winkelstellung drehen zu können. Die Notwendigkeit, kurzzeitig ein erhöhtes Drehmoment aufbringen zu müssen, verringert die Gefahr, dass der Kloben 11 unbeabsichtigt verdreht und aus der Klobenaufnahme 13 gelöst wird.

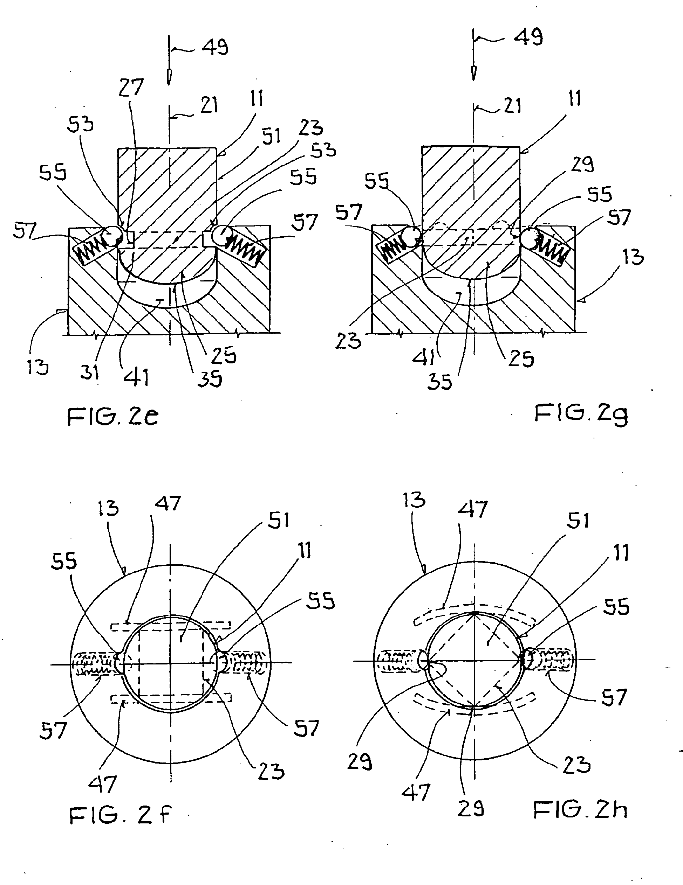

Fig. 2g und 2h zeigen den in die Klobenaufnahme 13 eingesetzten Kloben 11 in der zweiten Winkelstellung. Die beiden Eingriffskugeln 55 stehen nun außer Eingriff mit den Drehsicherungsaussparungen 53 und sind in die Kugelkanäle 57 zurückgedrängt. Der Kloben 11 kann ohne Behinderung durch die Eingriffskugeln 55 aus der Klobenaufnahme 13 entnommen werden.

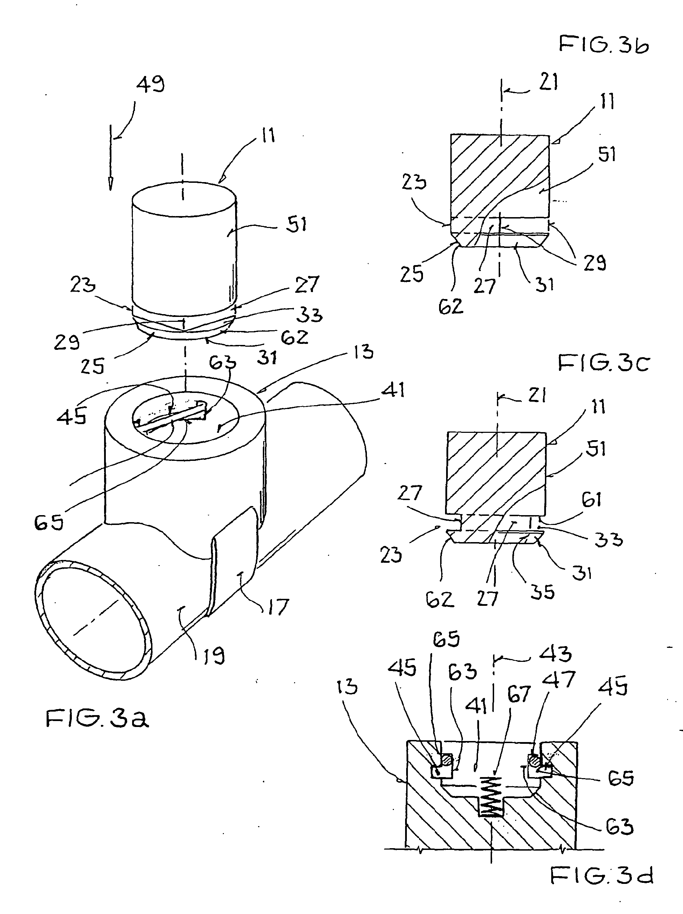

Fig. 3a bis 3g zeigen eine dritte Ausführungsform einer Halterung. Diese dritte Ausführungsform bildet eine Weiterbildung der ersten Ausführungsform gemäß Fig. 1a bis 1h, die alternativ oder zusätzlich zu der Weiterbildung gemäß Fig. 2a bis 2h verwirklicht werden kann. Gleichartige Teile wie bei der ersten Ausführungsform sind wiederum mit denselben Bezugszeichen gekennzeichnet. Gegenüber der ersten Ausführungsform bestehen im Wesentlichen die folgenden Unterschiede:

Wie insbesondere aus Fig. 3a und 3d ersichtlich ist, besitzt der Kloben 11 rückseitig einen Zylinderansatz 51, dessen Durchmesser dem Durchmesser des Klobenkopfs 25 und der Diagonale des quadratischen Querschnitts des Klobenschafts 23 entspricht. Die vier dem Klobenschaft 23 zugewandten, kreissegmentförmigen Abschnitte der Stirnseite des Zylinderansatzes 51 bilden jeweils eine Mitnehmerfläche 61. Somit steht an jeder Seitenfläche bzw. jedem Eingriffsabschnitt 27 des Klobenschafts 23 eine Mitnehmerfläche 61 des Zylinderansatzes 51einer Anschlagfläche 33 des Klobenkopfs 25 gegenüber.

An seiner Vorderseite besitzt der Klobenkopf 25 eine umlaufende Ablenkschräge 62.

Jeder der beiden tangentialen Aufnahmeschlitze 45 an der Innenwand der Klobenaufnahme 13 besitzt an seinen beiden Enden jeweils eine axiale Schlitzverlängerung 63, die parallel zu der Längsachse 43 der Klobenaufnahme 13 entgegen der Einführrichtung 49 verläuft. Zwischen den beiden Schlitzverlängerungen 63 eines Aufnahmeschlitzes 45 erstreckt sich demzufolge ein Blockierabschnitt 65 der Innenwand der Klobenaufnahme 13. Die beiden Federstreifen 47 sind nicht nur radial nach innen, sondern zusätzlich auch entgegen der Einführrichtung 49 vorgespannt. Somit durchqueren die beiden Federstreifen 47 im Normalfall einen Randbereich des Aufnahmeraums 41 zwischen den Enden der betreffenden beiden Schlitzverlängerungen 63.

Wie in Fig. 3d gezeigt ist, befindet sich am Boden des Aufnahmeraums 41 der Klobenaufnahme 13 eine axiale Druckfeder 67.

Die besondere Ausgestaltung des Klobens 11 und der Klobenaufnahme 13 der dritten Ausführungsform gemäß Fig. 3a bis 3g erhöht noch wirkungsvoller die Sicherheit gegen ein unbeabsichtigtes Lösen des Klobens 11 aus der Klobenaufnahme 13, wie nachfolgend erläutert wird:

Das Verrasten des Klobens 11 in der Klobenaufnahme 13 erfolgt prinzipiell so, wie bereits im Zusammenhang mit der ersten Ausführungsform gemäß Fig. 1a bis 1h beschrieben. Der Kloben 11 wird also entlang der Einführrichtung 49 axial in die Klobenaufnahme 13 eingeführt. Dabei tritt die umlaufende Ablenkschräge 62 des Klobenkopfs 25 in Kontakt mit den entgegen der Einführrichtung 49 vorgespannten Federstreifen 47.

Fig. 3e zeigt den somit erreichten Zustand. Falls der Kloben 1 1-nun noch weiter in Einführrichtung 49 bewegt wird, drückt die Ablenkschräge 62 des Klobenkopfs 25 die beiden Federstreifen 47 zunächst noch weiter nach unten. Sobald die Federstreifen 47 den jeweiligen Blockierabschnitt 65 der Klobenaufnahme 13 passiert haben, drängt die Ablenkschräge 62 des Klobenkopfs 25 bei andauernder Axialbewegung des Klobens 11 die beiden Federstreifen 47 radial nach außen, d.h. in den jeweiligen Aufnahmeschlitz 45. Außerdem stößt der Klobenkopf 25 mit seiner Vorderseite nun an der Druckfeder 67 an.

Um den Kloben 11 noch weiter in Einführrichtung 49 zu bewegen, muss eine zunehmende Druckkraft der Druckfeder 67 überwunden werden. Sobald der Klobenkopf 25 die Aufnahmeschlitze 45 passiert hat, schnappen die Federstreifen 47 radial nach innen zurück und liegen somit an den Seitenflächen bzw. Eingriffsabschnitten 27 des Klobenschafts 23 an. Der Kloben 11 ist nun bereits in der Klobenaufnahme 13 verrastet.

Falls der Kloben 11 nun losgelassen wird, drückt die Druckfeder 67 den Kloben 11 - vorzugsweise unterstützt von einer axialen Vorspannung der Federstreifen 47 - um eine kurze Distanz wieder aus der Klobenaufnahme 13 heraus, bis die Federstreifen 47 einerseits an den betreffenden Anschlagflächen 33 des Klobenkopfs 25 und andererseits an den axialen Begrenzungen der Schlitzverlängerungen 63 anliegen.

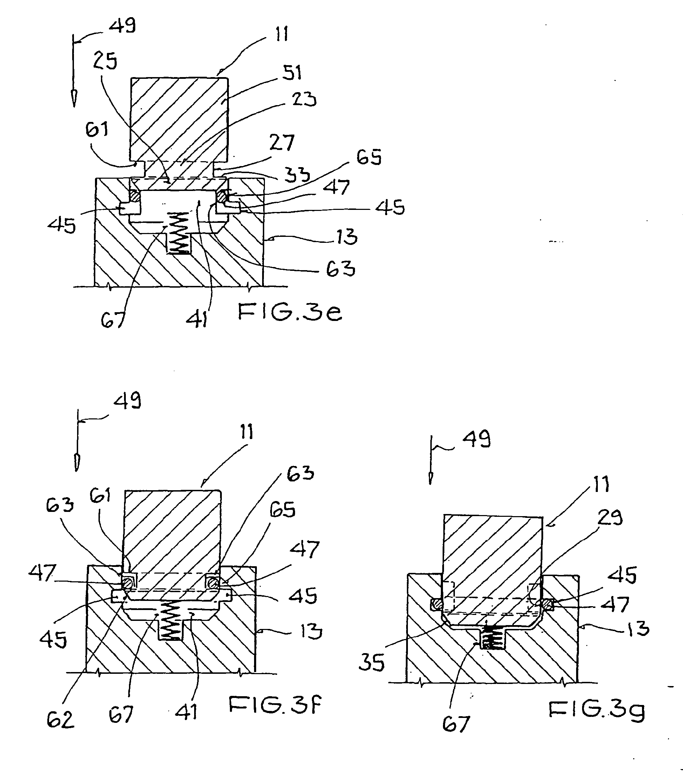

Fig. 3f zeigt den somit erreichten Zustand. Der Kloben 11 befindet sich nun in einer ersten Axiallage. Die Hintergreifungsabschnitte 31 des Klobenkopfs 25 hintergreifen die beiden Federstreifen 47. Diese werden von den Blockierabschnitten 65 der Innenwand der Klobenaufnahme 13 gegen ein radiales Zurückweichen blockiert. Die Federstreifen 47 durchqueren die entgegen der Einführrichtung 49 gerichteten Endabschnitte der Schlitzverlängerungen 63. Der Kloben 11 ist somit gegen eine Entnahme aus der Klobenaufnahme 13 gesichert.

Um den Kloben 11 nun wieder freizugeben, reicht es nicht aus, wenn der Kloben 11 - wie bei der ersten Ausführungsform - lediglich gedreht wird. Vielmehr muss der Kloben 11 zunächst entgegen der Druckkraft der Druckfeder 67 um eine kurze Distanz in Einführrichtung 49 in eine zweite Axiallage versetzt werden, in der sich der quadratische Klobenschaft 63 auf Höhe der Aufnahmeschlitze 45 der Klobenaufnahme 13 befindet. Erst in dieser zweiten Axiallage kann der Kloben 11 nun aus der ersten Winkelstellung gemäß Fig. 3f in die zweite Winkelstellung gedreht werden, um mittels der Auslösevorsprünge 29 die Federstreifen 47 radial nach außen in die Aufnahmeschlitze 45 zurückzudrängen, wie bereits im Zusammenhang mit der ersten Ausführungsform beschrieben.

Fig. 3g zeigt den somit erreichten Zustand, d.h. der Kloben 11 befindet sich hier in der zweiten Axiallage und in der zweiten Winkelstellung. Der Kloben 11 kann nun ohne weiteres entgegen der Einführrichtung 49 aus der Klobenaufnahme 13 gezogen werden.

Zusammengefasst erhöht die Weiterbildung gemäß der erläuterten dritten Ausführungsform die Sicherheit gegen ein unbeabsichtigtes Lösen des Klobens 11 aus der Klobenaufnahme 13. Der Benutzer muss nämlich vor einem Drehen des Klobens 11 bzw. des hiermit verbundenen Schlosses 15 gezielt eine Axialbewegung entgegen der Federkraft der Druckfeder 67 durchführen. Diese Handhabung ist dennoch einfach, da keine zusätzlichen Auslösetasten oder dergleichen betätigt werden müssen. Auch der Herstellungsaufwand für die Halterung ist gegenüber der ersten Ausführungsform gemäß Fig. 1a bis 1h nicht wesentlich erhöht.

Zu der dritten Ausführungsform gemäß Fig. 3a bis 3g ist noch anzumerken, dass die axialen Schlitzverlängerungen 63 ausgehend von dem jeweiligen Aufnahmeschlitz 45 auch in Einführrichtung 49, d.h. in Richtung des Bodens des Aufnahmeraums 41 verlaufen können. In diesem Fall muss der in der Klobenaufnahme 13 verrastete Kloben 11 zunächst axial entgegen der Einführrichtung 49 versetzt werden, um beispielsweise mittels der Anschlagflächen 33 des Klobenkopfs 25 die Federstreifen 47 auf Höhe der Aufnahmeschlitze 45 zu bringen und somit ein radiales Zurückdrängen der Federstreifen 47 zu gestatten.

Ferner können die Federstreifen 47 und die Druckfeder 67 an einem einzigen Federelement ausgebildet sein. Dieses Federelement kann beispielsweise eine U-Form besitzen, wobei jeweils ein Federstreifen 47 an einem Schenkel der U-Form und die die Druckfeder 67 durch eine Auswölbung der Basis der U-Form gebildet sind.

Alternativ zu der Verwendung einer Druckfeder 67 kann die erläuterte axiale Vorspannung des Klobens 11 auch allein durch entsprechende Ausformung oder Vorspannung der Federstreifen 47 herbeigeführt werden.

Zu sämtlichen Ausführungsformen ist noch anzumerken, dass der Kloben 11 vorzugsweise als ein Einlegeteil aus Metall ausgebildet ist. Ein derartiges Einlegeteil kann nämlich beispielsweise in den Schlosskörper des Spiralkabelschlosses 15 gemäß Fig. 1a integriert bzw. eingesetzt werden, selbst wenn dieser Schlosskörper aus Kunststoff gefertigt ist.

Ferner ist anzumerken, dass die Halterung selbstverständlich auch zur Befestigung anderer Zubehörteile, wie beispielsweise Lampen, Taschen oder Bordcomputer, eingesetzt werden kann und sich auch für die Befestigung von Zubehörteilen an Motorrädern eignet.

### Bezugszeichenliste

- 11: Kloben
- 13: Klobenaufnahme
- 15: Spiralkabelschloss
- 17: Gurtband
- 19: Fahrradrahmenabschnitt
- 21: Längsachse des Klobens
- 23: Klobenschaft
- 25: Klobenkopf
- 27: Eingriffsabschnitt
- 29: Auslösevorsprung
- 31: Hintergreifungsabschnitt
- 33: Anschlagfläche
- 35: Freigabeabschnitt
- 41: Aufnahmeraum
- 43: Längsachse der Klobenaufnahme
- 45: Aufnahmeschlitz
- 47: Federstreifen
- 49: Einführrichtung
- 51: Zylinderansatz
- 53: Drehsicherungsaussparung
- 55: Eingriffskugel
- 57: Kugelkanal
- 61: Mitnehmerfläche
- 62: Ablenkschräge
- 63: axiale Schlitzverlängerung
- 65: Blockierabschnitt
- 67: Druckfeder

## Patentansprüche

1. Halterung zur Befestigung eines Zubehörteils, insbesondere eines Schlosses (15), an einem Zweirad (19),
mit einem Kloben (11) und einer Klobenaufnahme (13), die sich jeweils entlang einer Längsachse (21, 43) erstrecken,
wobei der Kloben (11) einen Schaft (23) und an einem Ende des Schafts einen Kopf (25) aufweist,
wobei die Klobenaufnahme (13) einen Aufnahmeraum (41) zum axialen Einführen des Klobenkopfs (25) und zumindest eines Teils des Klobenschafts (23) begrenzt, und
wobei die Klobenaufnahme wenigstens eine Haltefeder (47) aufweist, die in Richtung des Aufnahmeraums (41) vorgespannt ist und in entspanntem Zustand in den Aufnahmeraum hineinragt,
**dadurch gekennzeichnet,**
**dass** der Klobenschaft (23) in einer regelmäßigen Teilung bezüglich der Umfangsrichtung des Klobens mehrere Auslösevorsprünge (29) und hierzu jeweils benachbarte und bezüglich der Längsachse (21) des Klobens radial zurückversetzte Eingriffsabschnitte (27) aufweist,
wobei der Klobenkopf (25) mehrere Hintergreifungsabschnitte (31) und Freigabeabschnitte (35) aufweist,
wobei jeder Hintergreifungsabschnitt (31) in axialer Verlängerung zu einem jeweiligen Eingriffsabschnitt (27) des Klobenschafts (23) angeordnet ist und über diesen Eingriffsabschnitt radial nach außen übersteht, und wobei jeder Freigabeabschnitt (35) in axialer Verlängerung zu einem jeweiligen Auslösevorsprung (29) des Klobenschafts (23) angeordnet ist, und
**dass** der Kloben (11) und die Klobenaufnahme (13) dergestalt zusammenwirken, dass
- wenn der Kloben (11) in einer ersten Winkelstellung in die Klobenaufnahme (13) eingeführt ist, die wenigstens eine Haltefeder (47) radial benachbart zu einem der Eingriffsabschnitte (27) des Klobenschafts (23) angeordnet ist und von dem entsprechenden Hintergreifungsabschnitt (31) des Klobenkopfs (25) hintergriffen wird, um den Kloben gegen eine axiale Entnahme aus der Klobenaufnahme zu sichern, und
- wenn der Kloben (11) ausgehend von der ersten Winkelstellung in eine zweite Winkelstellung gedreht wird, einer der Auslösevorsprünge (29) des Klobenschafts (23) die wenigstens eine Haltefeder (47) radial in Richtung der Klobenaufnahme (13) zurückdrängt, um den Kloben für eine axiale Entnahme aus der Klobenaufnahme freizugeben.

2. Halterung nach Anspruch 1,
**dadurch gekennzeichnet,**
**dass** die Eingriffsabschnitte (27) und die Auslösevorsprünge (29) des Klobens (11) jeweils in einer regelmäßigen Teilung von 90° angeordnet sind,
und/oder
**dass** die Eingriffsabschnitte (27) durch ebene Seitenflächen des Klobenschafts (23) gebildet sind,
und / oder
**dass** der Klobenschaft (23) als ein Vierkant ausgebildet ist.

3. Halterung nach einem der vorhergehenden Ansprüche,
**dadurch gekennzeichnet,**
**dass** die wenigstens eine Haltefeder (47) dergestalt mit den Auslösevorsprüngen (29) und den Eingriffsabschnitten (27) des Klobenschafts (23) zusammenwirkt, dass die Haltefeder (47) den Kloben (11) in Richtung der ersten Winkelstellung justiert und/oder in der ersten Winkelstellung stabilisiert,
und/oder
**dass** die Klobenaufnahme (13) zwei Haltefedern (47) aufweist, die einander bezüglich des Aufnahmeraums (41) diametral gegenüberstehend angeordnet sind.

4. Halterung nach einem der vorhergehenden Ansprüche,
**dadurch gekennzeichnet,**
**dass** die Auslösevorsprünge (29) durch Längskanten des Klobenschafts (23) gebildet sind,
und/oder
**dass** die Auslösevorsprünge (29) in axialer Richtung parallel zu der Längsachse (21) des Klobens verlaufen oder sich in Richtung des Klobenkopfes (25) verjüngen.

5. Halterung nach einem der vorhergehenden Ansprüche,
**dadurch gekennzeichnet,**
**dass** die Hintergreifungsabschnitte (31) in Richtung des Klobenschafts (23) eine ebene Rückseite besitzen, die sich quer zu der Längsachse (21) des Klobens erstreckt,
und/oder
**dass** die Hintergreifungsabschnitte (31) und/oder die Freigabeabschnitte (35) des Klobenkopfs (25) an ihrer von dem Klobenschaft (23) abgewandten Vorderseite als Ablenkschräge (62) zum Zurückdrängen der wenigstens einen Haltefeder (47) ausgebildet sind,
und/oder
**dass** jeder Freigabeabschnitt (35) des Klobenkopfs (25) an den axial benachbarten Auslösevorsprung (29) des Klobenschafts (23) dergestalt stetig anschließt, dass bei der axialen Entnahme des Klobens (11) aus der Klobenaufnahme (13) die wenigstens eine Haltefeder (47) ausgehend von dem Auslösevorsprung (29) an dem Freigabeabschnitt (35) entlang gleiten kann, wobei jeder Freigabeabschnitt (35) radial vorzugsweise genau bis an den axial benachbarten Auslösevorsprung (29) heranreicht.

6. Halterung nach einem der vorhergehenden Ansprüche,
**dadurch gekennzeichnet,**
**dass** der Klobenkopf (25) an seiner vom Klobenschaft (23) abgewandten Vorderseite konvex gewölbt ausgebildet ist, insbesondere als ein Kugelsegment,
und/oder
**dass** der Kloben (11) innerhalb der Klobenaufnahme (13) drehbar gelagert ist.

7. Halterung nach einem der vorhergehenden Ansprüche,
**dadurch gekennzeichnet,**
**dass** die wenigstens eine Haltefeder einen länglichen Federstreifen (47) aufweist, der sich in entspanntem Zustand am Rand des Aufnahmeraums (41) bezüglich der Längsachse (43) der Klobenaufnahme in tangentialer Richtung erstreckt,
wobei die Klobenaufnahme (13) vorzugsweise einen tangentialen Schlitz (45) aufweist, aus dem der Federstreifen (47) in entspanntem Zustand in den Aufnahmeraum (41) hineinragt und der den Federstreifen (47) aufnimmt, wenn der Federstreifen mittels des Auslösevorsprungs (29) zurückgedrängt wird.

8. Halterung nach Anspruch 7,
**dadurch gekennzeichnet,**
**dass** der tangentiale Schlitz (45) an seinen Enden zwei axiale Schlitzverlängerungen (63) aufweist, und
**dass** der Kloben (11) und die Klobenaufnahme (13) dergestalt zusammenwirken, dass
- wenn der Kloben (11) in der ersten Winkelstellung in einer ersten Axiallage in die Klobenaufnahme (13) eingeführt ist, der Federstreifen (47) sich zwischen den zwei axialen Schlitzverlängerungen (63) erstreckt und somit gegen ein radiales Zurückdrängen gesperrt ist, und
- erst wenn der Kloben (11) in der ersten Winkelstellung in eine zweite Axiallage axial versetzt worden ist, der Federstreifen (47) sich auf Höhe des tangentialen Schlitzes (45) befindet und nun mittels des Auslösevorsprungs (29) des Klobenschafts (23) radial in Richtung der Klobenaufnahme (13) zurückgedrängt werden kann, indem der Kloben in die zweite Winkelstellung gedreht wird.

9. Halterung nach Anspruch 8,
**dadurch gekennzeichnet,**
**dass** der Kloben (11) axial in Richtung der ersten Axiallage vorgespannt ist,
und/oder
**dass** der Kloben (11) wenigstens einen Mitnehmerabschnitt (61) aufweist, durch den bei einem axialen Versetzen des Klobens aus der ersten Axialstellung in die zweite Axialstellung auch der Federstreifen (47) axial versetzt wird,
und/oder
**dass** die axialen Schlitzverlängerungen (63) entlang der Klobenaufnahme (13) entgegen der Einführrichtung (49) des Klobens verlaufen, und der in die Klobenaufnahme (13) eingeführte Kloben (11) entgegen seiner Einführrichtung (49) vorgespannt ist, wobei der Klobenkopf (25) an seiner vom Klobenschaft (23) abgewandten Vorderseite vorzugsweise derart angeschrägt ist, dass der Klobenkopf bei einem Einführen des Klobens in die Klobenaufnahme sowohl eine axiale als auch eine radiale Kraft auf den Federstreifen (47) überträgt.

10. Halterung nach einem der Ansprüche 7 bis 9,
**dadurch gekennzeichnet,**
**dass** zwei Federstreifen (47) vorgesehen sind, die in entspanntem Zustand parallel zueinander verlaufen,
wobei die zwei Federstreifen (47) vorzugsweise durch ein gemeinsames, in der Klobenaufnahme (13) gesichertes Federelement gebildet sind.

11. Halterung nach einem der Ansprüche 1 bis 6,
**dadurch gekennzeichnet,**
**dass** die wenigstens eine Haltefeder eine vorgespannte Kugel oder einen Federring aufweist.

12. Halterung nach einem der vorhergehenden Ansprüche,
**dadurch gekennzeichnet,**
**dass** die Halterung eine Drehsicherungseinrichtung (53, 55) aufweist, die den Kloben (11) gegen ein unbeabsichtigtes Verdrehen aus der ersten Winkelstellung in die zweite Winkelstellung sichert.

13. Halterung nach Anspruch 12,
**dadurch gekennzeichnet,**
**dass** der Kloben (11) einerseits und die Klobenaufnahme (13) andererseits wenigstens eine Drehsicherungsaussparung (53) und wenigstens ein Eingriffsmittel (55) aufweisen, oder umgekehrt, wobei das wenigstens eine Eingriffsmittel in der ersten Winkelstellung des in die Klobenaufnahme eingeführten Klobens rückfedernd in die wenigstens eine Drehsicherungsaussparung eingreift,
und/oder
**dass** mehrere Drehsicherungsaussparungen (53) in der regelmäßigen Teilung vorgesehen sind,
und/oder
**dass** die Klobenaufnahme (13) ein Eingriffsmittel oder zwei einander diametral gegenüberstehende Eingriffsmittel (55) aufweist,
und/oder
**dass** das wenigstens eine Eingriffsmittel eine vorgespannte Kugel (55) oder einen Federring aufweist.

14. Schloss mit einer Halterung nach einem der vorhergehenden Ansprüche.

## Claims

1. A holder for the fastening of an accessory part, in particular a lock (15), to a two-wheeler (19),
having a bolt (11) and a bolt receiver (13) each extending along a longitudinal axis (21, 43),
wherein the bolt (11) has a shaft (23) and a head (25) at an end of the shaft;
wherein the bolt receiver (13) bounds a receiving space (41) for the axial introduction of the bolt head (25) and at least a part of the bolt shaft (23);
wherein the bolt receiver has at least one retaining spring (47) which is biased in the direction of the receiving space (41) and projects into the receiving space in the relaxed state,
**characterised in that**
the bolt shaft (23) has a plurality of trigger projections (29) at a regular pitch with respect to the circumferential direction of the bolt and has engagement sections (27) respectively adjacent thereto and set back radially with respect to the longitudinal axis (21) of the bolt,
with the bolt head (25) having a plurality of catch sections (31) and release sections (35),
with each catch section (31) being arranged in an axial extension to a respective engagement section (27) of the bolt shaft (23) and projecting radially outwardly beyond this engagement section and with each release section (35) being arranged in an axial extension to a respective trigger projection (29) of the bolt shaft (23); and
**in that** the bolt (11) and the bolt receiver (13) cooperate such that
- when the bolt (11) is introduced into the bolt receiver (13) in a first angular position, the at least one retaining spring (47) is arranged radially adjacent to one of the engagement sections (27) of the bolt shaft (23) and the corresponding catch section (31) of the bolt shaft (25) engages behind it to secure the bolt against an axial removal from the bolt receiver; and
- when the bolt (11) is rotated into a second angular position starting from the first angular position, one of the trigger projections (29) of the bolt shaft (23) urges the at least one retaining spring (47) radially backwards in the direction of the bolt receiver (13) to release the bolt for an axial removal from the bolt receiver.

2. A holder (1) in accordance with claim 1, **characterised in that** the engagement sections (27) and the trigger projections (29) of the bolt (11) are each arranged at a regular pitch of 90°;
and/or
**in that** the engagement sections (27) are formed by planar side areas of the bolt shaft (23);
and/or
**in that** the bolt shaft (23) is made as a four-cornered bar.

3. A holder in accordance with any one of the preceding claims, **characterised in that** the at least one retaining spring (47) cooperates with the trigger projections (29) and the engagement sections (27) of the bolt shaft (23) such that the retaining spring (47) adjusts the bolt (11) in the direction of the first angular position and/or stabilises it in the first angular position;
and/or
**in that** the bolt receiver (13) has two retaining springs (47) which are arranged diametrically opposed to one another with respect to the receiving space (41).

4. A holder in accordance with any one of the preceding claims, **characterised in that** the trigger projections (29) are formed by longitudinal edges of the bolt shaft (23);
and/or
**in that** the trigger projections (29) extend in the axial direction parallel to the longitudinal axis (21) of the bolt or taper in the direction of the bolt head (25).

5. A holder in accordance with any one of the preceding claims, **characterised in that** the catch sections (31) have a planar rear side in the direction of the bolt shaft (23), said planar rear side extending transversely to the longitudinal axis (21) of the bolt;
and/or
**in that** the catch sections (31) and/or the release sections (35) of the bolt head (25) are made at their front side remote from the bolt shaft (23) as a deflection ramp (62) for the urging backwards of the at least one retaining spring (47);
and/or
**in that** each release section (35) of the bolt head (25) constantly adjoins the axially adjacent trigger projection (29) of the bolt shaft (23) such that, on the axial removal of the bolt (11) from the bolt receiver (13), the at least one retaining spring (47) can slide along the release section (35), starting from the trigger projection (29), with each release section (35) preferably extending radially precisely up to the axially adjacent trigger projection (29).

6. A holder in accordance with any one of the preceding claims, **characterised in that** the bolt head (25) is convexly arched at its front side remote from the bolt shaft (23), in particular as a segment of a ball;
and/ or
**in that** the bolt (11) is rotatably supported inside the bolt receiver (13).

7. A holder in accordance with any one of the preceding claims, **characterised in that** the at least one retaining spring has an elongate spring strip (47) which extends in the relaxed state at the edge of the receiver space (41) in the tangential direction with respect to the longitudinal axis (43) of the bolt receiver, with the bolt receiver (13) preferably having a tangential slot (45) from which the spring strip (47) projects into the receiver space (41) in the relaxed state and receives the spring strip (47) when the spring strip is urged backwards by means of the trigger projection (29).

8. A holder in accordance with claim 7, **characterised in that** the tangential slot (45) has two axial slot extensions (63) at its ends; and **in that** the bolt (11) and the bolt receiver (13) cooperate such that
- when the bolt (11) is introduced into the bolt receiver (13) in a first axial position in the first angular position, the spring strip (47) extends between the two axial slot extensions (63) and is thus blocked against being urged back radially; and
- only when the bolt (11) in the first angular position has been axially offset into a second axial position, is the spring strip (47) located at the level of the tangential slot (45) and can now be urged backwards radially in the direction of the bolt receiver (13) by means of the trigger projection (29) of the bolt shaft (23) **in that** the bolt is rotated into the second angular position.

9. A holder in accordance with claim 8, **characterised in that** the bolt (11) is axially biased in the direction of the first axial position;
and/or
**in that** the bolt (11) has at least one driver portion (61) by which the spring strip (47) is also axially offset on an axial movement of the bolt from the first axial position into the second axial position;
and/or
**in that** the axial slot extensions (63) along the bolt receiver (13) extend against the direction of introduction (49) of the bolt and the bolt (11) introduced into the bolt receiver (13) is biased against its direction of introduction (49), with the bolt head (25) preferably being chamfered at its front side remote from the bolt shaft (23) such that the bolt head transmits both an axial force and a radial force onto the spring strip (47) on an introduction of the bolt into the bolt receiver.

10. A holder in accordance with any one of the claims 7 to 9, **characterised in that** two spring strips (47) are provided which extend parallel to one another in the relaxed state, with the two spring strips (47) preferably being formed by a common spring element secured in the bolt receiver (13).

11. A holder in accordance with any one of the claims 1 to 6, **characterised in that** the at least one retaining spring has a biased ball or a spring ring.

12. A holder in accordance with any one of the preceding claims, **characterised in that** the holder has a device (53, 55) providing security against rotation which secures the bolt (11) against an unintentional rotation out of the first angular position into the second angular position.

13. A holder in accordance with claim 12, **characterised in that** the bolt (11), on the one hand, and the bolt receiver (13), on the other hand, have at least one cut-out (53) providing security against rotation and at least one engagement means (55), or vice versa, with the at least one engagement means engaging resiliently into the at least one cut-out providing security against rotation in the first angular position of the bolt introduced into the bolt receiver;
and/or
**in that** a plurality of cut-outs (53) providing security against rotation are provided at the regular pitch;
and/or
**in that** the bolt receiver (13) has an engagement means or two engagement means (55) standing diametrically opposed to one another;
and/or
**in that** the at least one engagement means has a biased ball (55) or a spring ring.

14. A lock having a holder in accordance with any one of the preceding claims.

## Revendications

1. Monture pour la fixation d'un accessoire, en particulier d'un cadenas (15) sur un deux-roues (19),
comprenant un plot (11) et un logement de réception de plot (13), qui s'étendent chacun le long d'un axe longitudinal (21, 43),
le plot (11) comprend une tige (23) et une tête (25) à une extrémité de la tige,
le logement de réception de plot (13) délimite une chambre de réception (41) pour l'introduction axiale de la tête (25) du plot et d'au moins une partie de la tige (23) du plot, et
le logement de réception de plot comprend au moins un ressort de retenue (47) qui est bandé en direction de la chambre de réception (41) et qui, dans l'état détendu, pénètre dans la chambre de réception,
**caractérisée en ce que**
la tige (23) du plot présente, dans une subdivision régulière par rapport à la direction périphérique du plot, plusieurs saillies de déclenchement (29) et des tronçons d'engagement (27) respectivement voisins des saillies et en retrait radialement par rapport à l'axe longitudinal (21) du plot,
la tête (25) du plot comporte plusieurs tronçons (31) d'agrippement arrière et plusieurs tronçons de libération (35),
chaque tronçon (31) d'agrippement arrière est agencé dans le prolongement axial d'un tronçon d'engagement (27) respectif de la tige (23) du plot et dépasse radialement vers l'extérieur au-delà de ce tronçon d'engagement, et chaque tronçon de libération (35) est agencé dans le prolongement axial d'une saillie de déclenchement respective (29) de la tige (23) du plot, et
**en ce que** le plot (11) et le logement de réception de plot (13) coopèrent de telle manière que :
- quand le plot (11) est introduit dans une première position angulaire dans le logement de réception de plot (13), ledit au moins un ressort de retenue (47) est agencé radialement au voisinage de l'un des tronçons d'engagement (27) de la tige (23) du plot et est agrippé par l'arrière par le tronçon d'agrippement arrière correspondant (31) de la tête (25) du plot, afin de bloquer le plot à l'encontre d'un enlèvement axial hors du logement de réception de plot, et
- quand le plot (11) est tourné, en partant de la première position angulaire, jusque dans une seconde position angulaire, l'une des saillies de déclenchement (29) de la tige (23) du plot repousse ledit au moins un ressort de retenue (47) radialement en direction du logement de réception de plot (13), afin de libérer le plot pour un enlèvement axial hors du logement de réception de plot.

2. Monture selon la revendication 1, **caractérisée en ce que**
les tronçons d'engagement (27) et les saillies de déclenchement (29) du plot (11) sont agencés respectivement dans une subdivision régulière de 90°,
et/ou **en ce que**
les tronçons d'engagement (27) sont formés par des faces latérales planes de la tige (23) du plot,
et/ou **en ce que**
la tige (23) du plot est réalisée à section carrée.

3. Monture selon l'une des revendications précédentes, **caractérisée en ce que**
ledit au moins un ressort de retenue (47) coopère avec les saillies de déclenchement (29) et avec les tronçons d'engagement (27) de la tige (23) du plot de telle façon que le ressort de retenue (47) ajuste le plot (11) en direction de la première position angulaire et/ou le stabilise dans la première position angulaire,
et/ou **en ce que**
le logement de réception de plot (13) comprend deux ressorts de retenue (47) qui sont agencés diamétralement à l'opposé l'un de l'autre par rapport à la chambre de réception (41).

4. Monture selon l'une des revendications précédentes, **caractérisée en ce que**
les saillies de déclenchement (29) sont formées par des arêtes longitudinales de la tige (23) du plot,
et/ou **en ce que**
les saillies de déclenchement (29) s'étendent en direction axiale parallèlement à l'axe longitudinal (21) du plot, ou vont en se rétrécissant en direction de la tête (25) du plot.

5. Monture selon l'une des revendications précédentes, **caractérisée en ce que**
les tronçons d'agrippement arrière (31) possèdent en direction de la tige (23) de plot une face arrière plane qui s'étend transversalement à l'axe longitudinal (21) du plot,
et/ou **en ce que**
les tronçons d'agrippement arrière (31) et/ou les tronçons de libération (35) de la tête (25) du plot sont réalisés, sur leur face antérieure détournée de la tige (23) du plot, sous forme de pentes de déflexion (62) pour repousser ledit au moins un ressort de retenue (47),
et/ou **en ce que**
chaque tronçon de libération (35) de la tête (25) du plot se raccorde en continu à la saillie de déclenchement (29) axialement voisine de la tige (23) du plot de telle façon que lors de l'enlèvement axial du plot (11) hors du logement de réception de plot (13), ledit au moins un ressort de retenue (47) est capable de coulisser en partant de la saillie de déclenchement (29) le long du tronçon de libération (35), chaque tronçon de libération (35) s'étendant radialement de préférence exactement jusqu'à la saillie de déclenchement (29) axialement voisine.

6. Monture selon l'une des revendications précédentes, **caractérisée en ce que**
la tête (25) du plot est réalisée avec un bombement convexe sur sa face avant détournée de la tige (23) du plot, en particulier sous la forme d'un segment sphérique,
et/ou **en ce que**
le plot (11) est monté en rotation à l'intérieur du logement de réception de plot (13).

7. Monture selon l'une des revendications précédentes, **caractérisée en ce que**
ledit au moins un ressort de retenue comprend un ruban-ressort allongé (47) qui, à l'état détendu, s'étend en direction tangentielle à la bordure de la chambre de réception (41) par rapport à l'axe longitudinal (43) du logement de réception de plot,
ledit logement de réception de plot (13) comprend au moins une fente tangentielle (45) depuis laquelle le ruban-ressort (47) à l'état détendu pénètre dans la chambre de réception (41) et qui reçoit le ruban-ressort (47) lorsque le ruban-ressort est chassé au moyen de la saillie de déclenchement (29).

8. Monture selon la revendication 7, **caractérisée en ce que**
la fente tangentielle (45) comporte à ses extrémités deux prolongements de fente (63),
et **en ce que** le plot (11) et le logement de réception de plot (13) coopèrent de telle façon que :
- quand le plot (11) est introduit dans le logement de réception de plot (13) dans la première position angulaire et dans une première position axiale, le ruban-ressort (47) s'étend entre les deux prolongements de fente axiaux (63) et est par conséquent bloqué à l'encontre d'un repoussement radial, et
- seulement une fois que le plot (11) dans la première position angulaire a été déplacé axialement jusque dans une seconde position axiale, le ruban-ressort (47) se trouve à la hauteur de la fente tangentielle (45) et peut désormais être repoussé radialement en direction du logement de réception de plot (13) au moyen de la saillie de déclenchement (29) de la tige (23) du plot, en tournant le plot jusque dans la seconde position angulaire.

9. Monture selon la revendication 8, **caractérisée en ce que**
le plot (11) est précontraint axialement en direction de la première position axiale,
et/ou **en ce que**
le plot (11) comprend au moins un tronçon d'entraînement (61) au moyen duquel, lors d'un déplacement axial du plot depuis la première position axiale jusque dans la deuxième position axiale, le ruban-ressort (47) est aussi déplacé axialement,
et/ou **en ce que**
les prolongements de fente axiaux (63) s'étendent le long du logement de réception de plot (13) à l'encontre de la direction d'introduction (49) du plot, et le plot (11) introduit dans le logement de réception de plot (13) est précontraint à l'encontre de sa direction d'introduction (49), la tête (25) du plot présentant un chanfrein, sur sa face antérieure détournée de la tige (23) du plot, de préférence tel que la tête du plot transmet, lors de l'introduction du plot dans le logement de réception de plot, aussi bien une force axiale qu'une force radiale sur le ruban-ressort (47).

10. Monture selon l'une des revendications 7 à 9, **caractérisée en ce que**
il est prévu deux rubans-ressorts (47) qui, dans l'état détendu, s'étendent parallèlement l'un à l'autre,
les deux rubans-ressorts (47) étant de préférence formés par un élément à ressort commun fixé dans le logement de réception de plot (13).

11. Monture selon l'une des revendications 1 à 6, **caractérisée en ce que** ledit au moins un ressort de retenue comprend une bille précontrainte ou une bague-ressort.

12. Monture selon l'une des revendications précédentes, **caractérisée en ce que**
la monture comprend un système de blocage antirotation (53, 55) qui bloque le plot (11) à l'encontre d'une rotation inopinée de la première position angulaire vers la seconde position angulaire.

13. Monture selon la revendication 12, **caractérisée en ce que**
le plot d'une part (11) et le logement de réception de plot d'autre part (13) comportent au moins un évidement de blocage antirotation (53), et au moins un moyen d'engagement (55), ou inversement, ledit au moins un moyen d'engagement (55) s'engage dans la première position angulaire du plot introduit dans le logement de réception de plot, avec effet élastique en retour, jusque dans ledit au moins un évidement de blocage antirotation,
et/ou **en ce que**
plusieurs évidements de blocage antirotation (53) sont prévus dans la subdivision régulière,
et/ou **en ce que** le logement de réception de plot (13) comporte un moyen d'engagement ou deux moyens d'engagement (55) opposés diamétralement l'un de l'autre,
et/ou **en ce que**
ledit au moins un moyen d'engagement comprend une bille précontrainte (55) ou une bague élastique.

14. Cadenas comprenant une monture selon l'une des revendications précédentes.
